# EUROPÄISCHE PATENTSCHRIFT

(11) **EP 1 790 885 B1**
(45) Veröffentlichungstag und Bekanntmachung des Hinweises auf die Patenterteilung: **26.03.2008**
(21) Anmeldenummer: 05025960.5
(22) Anmeldetag: 29.11.2005
(51) Int. Cl.: F16J 15/32

(54) **Dichtungsanordnung**
Sealing arrangement
Dispositif de joint d'étanchéité

(43) Veröffentlichungstag der Anmeldung: 30.05.2007
(73) Patentinhaber: Carl Freudenberg KG, 69469 Weinheim (DE)
(72) Erfinder: Henrich, Uwe, 69502 Hernsbach (DE)

(56) Entgegenhaltungen:
- DE-A1- 3 204 989
- DE-A1- 10 320 471
- US-A- 4 596 394

## Beschreibung

### Technisches Gebiet

Die Erfindung betrifft eine Dichtungsanordnung mit einem Tragkörper und einem Laufring, wobei zwischen Tragkörper und Laufring ein Dichtkörper angeordnet ist.

### Stand der Technik

Derartige Dichtungen sind allgemein bekannt. Häufig ist dabei der Laufring, beispielsweise durch einen umgebördelten Flansch am dem Tragkörper fixiert. Bei derartigen, auch als Kassettendichtungen, bezeichneten Dichtungsanordnurrgen ist der Dichtkörper zwischen dem Tragkörper und dem Laufring angeordnet und gegen grobe Verschmutzungen geschützt. Die Bestandteile der Dichtungsanordnung sind verliersicher aneinander befestigt, was insbesondere bei der Montage vorteilhaft ist. Der Dichtungskörper ist dabei stoffschlüssig an dem Tragkörper befestigt. Hierbei ist nachteilig, dass das stoffschlüssige von Dichtkörper und Tragring eine Vorbehandlung des Tragrings erfordert und an die Maßgenauigkeit des Tragkörpers hohe Anforderungen gestellt werden.

Eine solche Anordnung ist bekannt aus z.B. US 4,596,394. Dieses Dokument offenbart eine Dichtungsanordnung, umfassend einen Tragkörper, einen Dichtkörper, der an dem Tragkörper befestigt ist, wobei der Dichtkörper zumindest eine dynamisch dichtende erste Dichtlippe aufweist, die an einem Laufring dichtend anliegt, wobei der Laufring an dem Tragkörper formschlüssig gehalten ist.

### Darstellung der Erfindung

Der Erfindung liegt die Aufgabe zugrunde, eine Dichtungsanordnung bereit zu stellen, die einfach zu montieren und einfach und kostengünstig herstellbar ist, wobei die Bauelemente der Dichtungsanordnung verliersicher aneinander befestigbar sein sollen.

Diese Aufgabe wird mit den Merkmalen von Anspruch 1 gelöst. Auf vorteilhafte Ausgestaltungen nehmen die Unteransprüche Bezug.

Zur Lösung der Aufgabe umfasst die Dichtungsanordnung einen Tragkörper an dem ein Halteelement befestigt ist, einen Dichtkörper, der an dem Haltelement befestigt ist, wobei der Dichtkörper zumindest eine dynamisch dichtende erste Dichtlippe aufweist, die an einem Laufring dichtend anliegt, wobei der Laufring an dem Halteelement formschlüssig gehalten ist.
Dadurch sind der Dichtkörper und der Laufring verliersicher an dem Tragring fixiert und können problemlos gemeinsam montiert werden. Das Halteelement ist kostengünstig herstellbar und stellt das Bindeglied dar, durch das Dichtkörper und Laufring an dem Tragkörper gehalten sind. Ein stoffschtüssiges Anbinden des Dichtkörpers an den Tragkörper entfällt. Dabei ist das Halteelement vorzugsweise aus einem Kunststoffspritzguss gebildet, wodurch das Halteelement kostengünstig in großen Stückzahlen herstellbar ist. Durch den Formschluss ist der Laufring reibungsarm und drehbar an dem Tragkörper fixiert.

Das Halteelement kann kraft- und/oder formschlüssig an dem Tragkörper befestigt sein. Dadurch kann das Halteelement einfach und ohne Zusatzstoffe an dem Tragkörper befestigt werden. Das Halteelement kann aus einem anderen Werkstoff als der Tragkörper hergestellt werden. Beispielsweise kann der Tragkörper aus Metall bestehen und die Formgebung kann durch Stanzen erfolgen. Das Halteelement kann aus Kunststonspntzguss bestehen, wodurch auch kompliziertere Geometrien kostengünstig herstellbar sind.

Der Tragkörper kann am Innenumfang Ausnehmungen in Form einer Kerbverzahnung aufweisen. Durch die Kerbverzahnung sind das Halteelement und der Tragkörper drehfest miteinander verbunden. Dabei sind auch andere Geometrien denkbar, beispielsweise können über den Umfang Ausnehmungen in den Tragkörper eingebracht sein, in die Erhebungen des Halteelementes eingreifen. Das Halteelement weist dabei eine entsprechende Formgebung auf und kann an einer Stirnseite eine kongruent zu dem Tragkörper ausgebildete Kerbverzahnung aufweisen.

Der Dichtkörper kann formschlüssig an dem Halteelement gehalten sein. Dadurch ist der Dichtkörper ebenfalls drehfest an dem Tragkörper fixiert. Die Montage kann besonders einfach durch Aufstecken erfolgen. Vorbehandlungen für haftende Verbindungen können entfallen und an den Tragkörper können geringere Anforderungen hinsichtlich der Maßhaltigkeit gestellt werden.

Der Dichtkörper kann über seinen Umfang verteilt Ausnehmungen aufweisen, in die Noppen einsteckbar sind, die über den Umfang des Halteelementes verteilt sind. Die Noppen und die Ausnehmungen stellen dabei einfach herzustellende Elemente für eine formschlüssige Verbindung von Halteelement und Dichtkörper dar.

Der Dichtkörper kann zumindest eine statisch dichtende zweite Dichtlippe aufweisen, die an dem Tragkörper dichtend anliegt. Die statische Dichtlippe stellt anstelle einer stoffschlüssigen Verbindung eine statische Abdichtung dar. Dabei ist vorteilhaft, dass die statische Dichtlippe federnd ausgebildet ist und dadurch die Anpressung der dynamischen Dichtlippe an den Laufring dosierbar ist. Des Weiteren ist die Dichtungsanordnung unempfindlicher gegenüber Unwuchten. Infolge der federnd ausgeführten statischen Dichtlippe erfolgt ein Nachstellen der dynamischen Dichtlippe bei Verschleiß derselben. Dadurch kann eine längere Nutzungsdauer der Dichtelemente erreicht werden.

Der Laufring kann einen Radial- und einen Axialflansch aufweisen, wobei auf dem Axialflansch innenumfangsseitig eine Nut angeordnet ist. Eine Nut ist einfach und kostengünstig herstellbar und bildet einen Bestandteil der formschlüssigen Verbindung zwischen Halteelement und Laufring.

Das Halteelement kann zumindest ein Klipselement aufweisen, welches in die Nut des Laufrings einrastbar ist. Das Klipselement des Halteelements rastet dabei in die Nut in des Laufrings ein, wodurch beide Elemente formschlüssig verbunden sind. Die axiale Erstreckung der Nut ist dabei kleiner als die der Nut des Laufrings, so dass das Klipselement nach der Montage frei beweglich in der Nut angeordnet ist und eine reibungsarme Bewegung ermöglicht ist.

Der Laufring kann einen Messwertgeber umfassen. Dadurch ist eine Sensorik Platz sparend in die Dichtungsanordnung integriert. Die Anordnung ist besonders vorteilhaft, da der Laufring auf dem abzudichtenden Maschinenelement montiert ist und mit dessen Drehzahl rotiert. Dadurch kann die Drehzahl des Maschinenelementes einfach detektiert werden. Da die Dichtungsanordnung sehr kompakt ist, ergibt sich eine kompakte Kombination von Sensorik und Dichtungsfunktion.

Der Messwertgeber kann auf der dem Dichtkörper abgewandten Stirnseite des Laufrings angeordnet sein. Dadurch kann der Messwertgeber besonders einfach durch einen Sensor ausgewertet werden.

Der Messwertgeber kann durch eine kreisringförmige Spur gebildet sein, die aus einem magnetisierbaren Elastomer besteht Der Elastomer kann einfach und haltbar stoffschlüssig auf dem Laufring befestigt werden. Durch ein Magnetisierungswerkzeug kann die Spur flexibel mit einem magnetischen Muster versehen werden. Elektromagnetische Signale können durch Sensoren einfach erfasst und, beispielsweise digital, weiterverarbeitet werden.

### Kurzbeschreibung der Zeichnung

Einige Ausführungsbeispiele der erfindungsgemäßen Dichtungsanordnung werden nachfolgend anhand der Figuren näher beschrieben werden. Diese zeigen, jeweils schematisch:
Fig. 1 eine erfindungsgemäße Dichtungsanordnung mit Messwertgeber;
Fig. 2 den Tragring der Dichtungsanordnung;
Fig. 3 das Halteelement der Dichtungsanordnung;
Fig. 4 den Dichtkörper der Dichtungsanordnung;
Fig. 5 den Laufring der Dichtungsanordnung.

### Ausführung der Erfindung

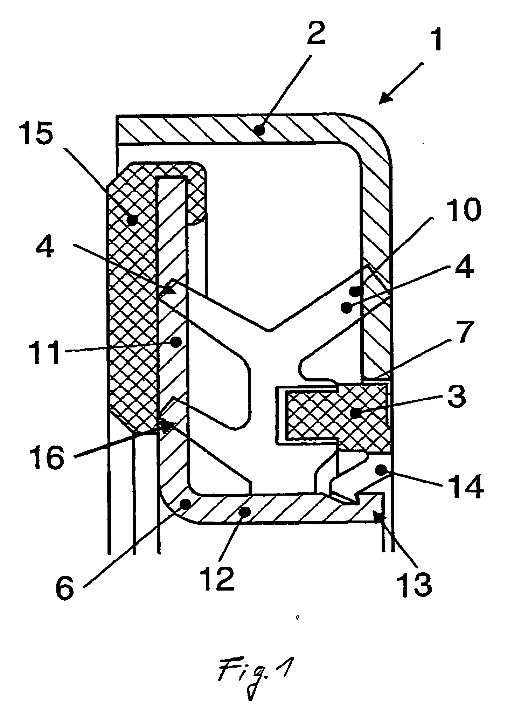

Figur 1 zeigt eine Dichtungsanordnung 1, mit einem Tragkörper 2. Der Tragkörper besteht aus Metall und dessen Formgebung erfolgt durch Stanzen. An dem Tragkörper ist kraft- und formschlüssig ein Halteelement 3 befestigt. Dazu weisen Haltelement 3 und Tragkörper kongruent zueinander geformte Kerbverzahnungen auf. An dem Halteelement 3 ist ein Dichtkörper 4 formschlüssig befestigt, wobei der Dichtkörper 4 eine dynamisch dichtende erste Dichtlippe 5 und eine statisch dichtende zweite Dichtlippe 10 aufweist. Zur Verbesserung der Dichteigenschaften hat der Dichtkörper zusätzlich eine dynamisch wirkende dritte Dichtlippe 16. Die erste und die dritte Dichtlippe 5, 16 liegen dichtend an einem Laufring 6 an. Der Laufring 6 besteht aus einem Axialflansch 12 und einen Radialflansch 11, wobei die dynamisch dichtenden Dichtlippen 5, 16 an der Stirnseite des Radialflansches 11 mit Vorspannung anliegen. Über den Axialflansch 12 ist der Laufring bei bestimmungsgemäßer Verwendung drehfest auf dem abzudichtenden Maschinenelement befestigt. Der Laufring 6 ist formschlüssig, aber nicht in seiner Drehbeweglichkeit gegenüber dem Tragkörper 2 gehindert, an dem Halteelement 3 gehalten. Zur formschlüssigen Fixierung weist der Laufring 6 eine Nut 13 auf, die innenumfangsseitig auf dem Axialflansch 12 angeordnet ist. In die Nut 13 rastet ein Klipselement 14 ein, welches an dem Halteelement 3 angeordnet ist. Dabei ist die radiale Erstreckung des Klipselementes 14 so bemessen, dass das Klipselement 14 nach der Montage reibungsarm in der Nut 13 beweglich ist. Vor der Montage erfolgt eine Anpressung des Klipselementes 14 aufgrund der Rückstellkräfte der Dichtlippen 5, 10, 16.
An dem Laufring 6 ist auf dessen dem Dichtkörper 4 abgewandten Stirnseite ein Messwertgeber 15 angeordnet. Der Messwertgeber 15 ist durch eine kreisringförmige Spur gebildet, die aus einem magnetisierbaren Elastomer besteht.

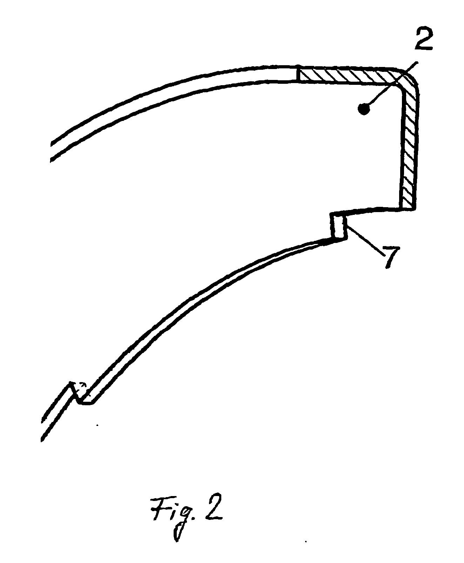

Figur 2 zeigt einen Tragkörper 2 einer Dichtungsanordnung gemäß Figur 1. Der Tragkörper 2 ist als Stanzteil ausgebildet und weist an seinem Innenumfang Ausnehmungen 7 in Form einer Kerbverzahnung auf. Alternativ können über den Umfang verteilt Durchbrechungen angeordnet sein.

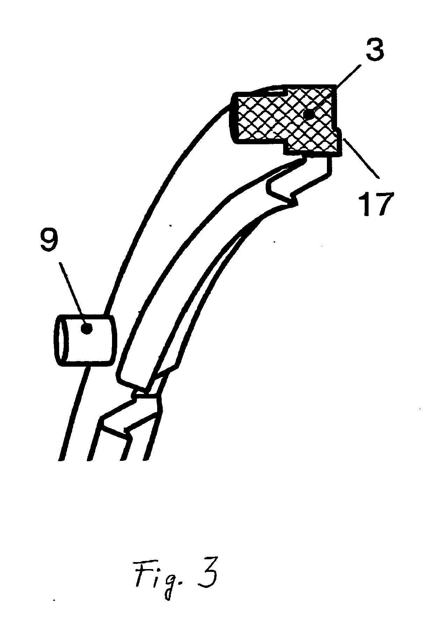

Figur 3 zeigt ein Halteelement 3 einer Dichtungsanordnung gemäß Figur 1. Das Halteelement 3 besteht aus einem Kunststoff, beispielsweise Polyamid, und die Formgebung erfolgt im Spritzgleßverfahren. Das Halteelement 3 weist an einer Stirnseite eine kongruent zu dem Tragkörper 2 ausgebildete Kerbverzahnung 17 auf. Alternativ können über den Umfang des Halteelementes 3 verteilt Erhebungen angeordnet sein, die in die Durchbrechungen des Tragkörpers 2 eingreifen. An dem Innenumfang des Halteelementes 3 sind einstückig und materialeinheitlich Klipselemente 14 angeordnet Das Haltelement 3 weist über den Umfang verteilt Noppen 9 auf, auf die der Dichtkörper 4 aufsteckbar und damit drehfest fixierbar ist.

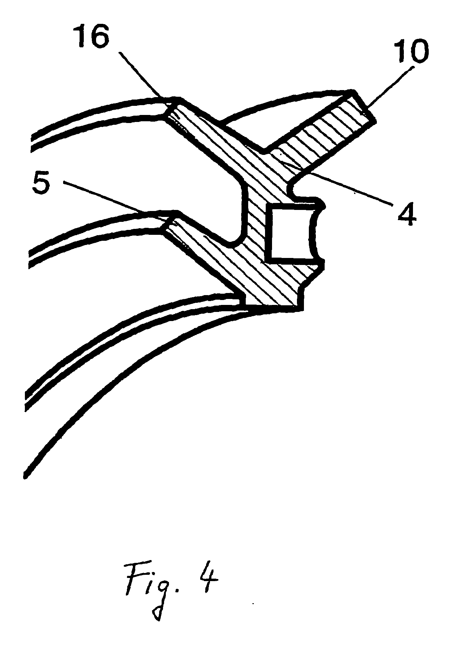

Figur 4 zeigt einen Dichtkörper 4 einer Dichtungsanordnung 4 gemäß Figur 1. Der Dichtkörper 4 besteht aus einem Kunststoff, beispielsweise Nitril-Butadien-Kautschuk, Polyacrylat-Elastomer oder Flourkautschuk. Der Dichtkörper 4 weist über seinen Umfang verteilt Ausnehmungen 8 auf, in die die Noppen 9 eingreifen, die über den Umfang des Halteelementes 3 verteilt sind.

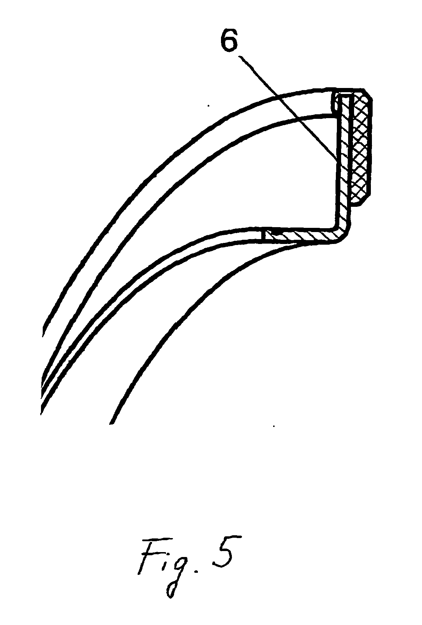

Figur 5 zeigt einen Laufring 6 einer Dichtungsanordnung 1. Der Laufring 6 ist aus einem metallischen Stanzteil gebildet.

## Patentansprüche

1. Dichtungsanordnung (1), umfassend einen Tragkörper (2) an dem ein Halteelement (3) befestigt ist, einen Dichtkörper (4), der an dem Haltelement (3) befestigt ist, wobei der Dichtkörper (4) zumindest eine dynamisch dichtende erste Dichtlippe (5) aufweist, die an einem Laufring (6) dichtend anliegt, wobei der Laufring (6) an dem Halteelement (3) formschlüssig gehalten ist.

2. Dichtungsanordnung nach Anspruch 1, **dadurch gekennzeichnet, dass** das Halteelement (3) kraft- und/oder formschlüssig an dem Tragkörper (2) befestigt ist.

3. Dichtungsanordnung nach Anspruch 1 oder 2, **dadurch gekennzeichnet, dass** der Tragkörper (2) an seinem Innenumfang Ausnehmungen (7) in Form einer Kerbverzahnung aufweist.

4. Dichtungsanordnung nach einem der Ansprüche 1 bis 3, **dadurch gekennzeichnet, dass** das Halteelement (3) an einer Stirnseite eine kongruent zu dem Tragkörper (2) ausgebildete Kerbverzahnung (17) aufweist.

5. Dichtungsanordnung nach einem der Ansprüche 1 bis 4, **dadurch gekennzeichnet, dass** der Dichtkörper (4) formschlüssig an dem Halteelement (3) gehalten ist.

6. Dichtungsanordnung nach einem der Ansprüche 1 bis 5, **dadurch gekennzeichnet, dass** der Dichtkörper (4) über seinen Umfang verteilt Ausnehmungen (8) aufweist, in die Noppen (9) einsteckbar sind, die über den Umfang des Halteelementes (3) verteilt sind.

7. Dichtungsanordnung nach einem der Ansprüche 1 bis 6, **dadurch gekennzeichnet, dass** der Dichtkörper (4) zumindest eine statisch dichtende zweite Dichtlippe (10) aufweist, die an dem Tragkörper (2) dichtend anliegt.

8. Dichtungsanordnung nach einem der Ansprüche 1 bis 7, **dadurch gekennzeichnet, dass** der Laufring (6) einen Radial- (11) und einen Axialflansch (12) aufweist, wobei auf dem Axialflansch (12) innenumfangsseitig eine Nut (13) angeordnet ist.

9. Dichtungsanordnung nach einem der Ansprüche 1 bis 8, **dadurch gekennzeichnet, dass** das Halteelement (3) zumindest ein Klipselement (14) aufweist welches in die Nut (13) des Laufrings (6) einrastbar ist.

10. Dichtungsanordnung nach einem der Ansprüche 1 bis 9, **dadurch gekennzeichnet, dass** der Laufring (6) einen Messwertgeber (15) umfasst.

11. Dichtungsanordnung nach Anspruch 10, **dadurch gekennzeichnet, dass** der Messwertgeber (15) auf der dem Dichtkörper (4) abgewandten Stirnseite des Laufrings (6) angeordnet ist

12. Dichtungsanordnung nach Anspruch 10 oder 11, **dadurch gekennzeichnet, dass** der Messwertgeber (15) durch eine kreisringförmige Spur gebildet ist, die aus einem magnetisierbaren Elastomer besteht.

## Claims

1. Sealing arrangement (1), comprising a support body (2) to which a holding element (3) is fastened, a sealing body (4) which is fastened to the holding element (3), with the sealing body (4) having at least one dynamically sealing first sealing lip (5) which bears sealingly against a running ring (6), with the running ring (6) being held in a form-fitting manner on the holding element (3).

2. Sealing arrangement according to Claim 1, **characterized in that** the holding element (3) is fastened in a force-fitting and/or form-fitting manner to the support body (2).

3. Sealing arrangement according to Claim 1 or 2, **characterized in that** the support body (2) has, on its inner periphery, recesses (7) in the form of a serration.

4. Sealing arrangement according to one of Claims 1 to 3, **characterized in that** the holding element (3) has, on one end side, a serration (17) which is formed congruently with respect to the support body (2).

5. Sealing arrangement according to one of Claims 1 to 4, **characterized in that** the sealing body (4) is held in a form-fitting manner on the holding element (3).

6. Sealing arrangement according to one of Claims 1 to 5, **characterized in that** the sealing body (4) has recesses (8) distributed over its periphery, into which recesses (8) can be inserted lugs (9) which are distributed over the periphery of the holding element (3).

7. Sealing arrangement according to one of Claims 1 to 6, **characterized in that** the sealing body (4) has at least one statically sealing second sealing lip (10) which bears sealingly against the support body (2).

8. Sealing arrangement according to one of Claims 1 to 7, **characterized in that** the running ring (6) has a radial (11) and an axial flange (12), with a groove (13) being arranged on the axial flange (12) at the inner peripheral side.

9. Sealing arrangement according to one of Claims 1 to 8, **characterized in that** the holding element (3) has at least one clip element (14) which can be latched into the groove (13) of the running ring (6).

10. Sealing arrangement according to one of Claims 1 to 9, **characterized in that** the running ring (6) comprises a transducer (15).

11. Sealing arrangement according to Claim 10, **characterized in that** the transducer (15) is arranged on that end side of the running ring (6) which faces away from the sealing body (4).

12. Sealing arrangement according to Claim 10 or 11, **characterized in that** the transducer (15) is formed by a circular-ring-shaped track which is composed of a magnetizable elastomer.

## Revendications

1. Dispositif de joint d'étanchéité (1), comprenant un corps porteur (2) sur lequel est fixé un élément de retenue (3), un corps d'étanchéité (4), qui est fixé sur l'élément de retenue (3), le corps d'étanchéité (4) présentant au moins une première lèvre d'étanchéité (5) réalisant une étanchéité dynamique, qui s'applique hermétiquement contre une bague de roulement (6), la bague de roulement (6) étant maintenue par engagement par coopération de forme sur l'élément de retenue (3).

2. Dispositif de joint d'étanchéité selon la revendication 1, **caractérisé en ce que** l'élément de retenue (3) est fixé par engagement par force et/ou par coopération de forme sur le corps porteur (2).

3. Dispositif de joint d'étanchéité selon la revendication 1 ou 2, **caractérisé en ce que** le corps porteur (2) présente sur sa circonférence interne des évidements (7) en forme de denture à encoches.

4. Dispositif de joint d'étanchéité selon l'une quelconque des revendications 1 à 3, **caractérisé en ce que** l'élément de retenue (3) présente sur un côté frontal une denture à encoches (17) réalisée de manière coïncidant avec le corps porteur (2).

5. Dispositif de joint d'étanchéité selon l'une quelconque des revendications 1 à 4, **caractérisé en ce que** le corps d'étanchéité (4) est maintenu par engagement par coopération de forme sur l'élément de retenue (3).

6. Dispositif de joint d'étanchéité selon l'une quelconque des revendications 1 à 5, **caractérisé en ce que** le corps d'étanchéité (4) présente des évidements (8) répartis sur sa circonférence, dans lesquels des protubérances (9) peuvent être enfoncées, lesquelles sont réparties sur la circonférence de l'élément de retenue (3).

7. Dispositif de joint d'étanchéité selon l'une quelconque des revendications 1 à 6, **caractérisé en ce que** le corps d'étanchéité (4) présente au moins une deuxième lèvre d'étanchéité (10) réalisant l'étanchéité de manière statique, qui s'applique hermétiquement contre le corps porteur (2).

8. Dispositif de joint d'étanchéité selon l'une quelconque des revendications 1 à 7, **caractérisé en ce que** la bague de roulement (6) présente une bride radiale (11) et une bride axiale (12), une rainure (13) étant disposée du côté de la circonférence interne sur la bride axiale (12).

9. Dispositif de joint d'étanchéité selon l'une quelconque des revendications 1 à 8, **caractérisé en ce que** l'élément de retenue (3) présente au moins un élément d'enclipsage (14) qui peut être encliqueté dans la rainure (13) de la bague de roulement (6).

10. Dispositif de joint d'étanchéité selon l'une quelconque des revendications 1 à 9, **caractérisé en ce que** la bague de roulement (6) comprend un générateur de valeur de mesure (15).

11. Dispositif de joint d'étanchéité selon la revendication 10, **caractérisé en ce que** le générateur de valeur de mesure (15) est disposé sur le côté frontal de la bague de roulement (6) opposé au corps d'étanchéité (4).

12. Dispositif de joint d'étanchéité selon la revendication 10 ou 11, **caractérisé en ce que** le générateur de valeur de mesure (15) est formé par une piste de forme annulaire circulaire, qui se compose d'un élastomère aimantable.
